# EUROPEAN PATENT APPLICATION

(11) **EP 3 444 377 A1**
(43) Date of publication of application: **20.02.2019**
(21) Application number: 17782146.9
(22) Date of filing: 28.02.2017
(51) Int. Cl.: C23C 18/20, B32B 15/06, C23C 18/31, C23C 18/38, C23C 18/42

(54) **MEMBER, ELECTRIC/ELECTRONIC COMPONENT, ELECTRIC/ELECTRONIC DEVICE, AND MEMBER-MANUFACTURING METHOD**

(30) Priority: 15.04.2016 JP 2016082160
(71) Applicant: Alps Electric Co., Ltd., Tokyo 145-8501 (JP)
(72) Inventor: KANNO, Hiroyuki, Tokyo 145-8501 (JP)
(74) Representative: Schmitt-Nilson Schraud Waibel Wohlfrom Patentanwälte Partnerschaft mbB
(86) International application number: PCT/JP2017/007877
(87) International publication number: WO 2017/179328

(57) **Abstract**

[Object] To provide a member in which a target member for plating treatment is a base material including an elastic section including a sulfur-containing elastic body and which has appropriate conductivity.

[Solution] A member 1 includes a base material 10 and an electroless plating layer 20. The base material 10 includes an elastic section 10E that includes a sulfur-containing elastic body. The electroless plating layer 20 is provided on the elastic section 10E of the base material 10. The base material 10 includes the elastic section 10E, and the electroless plating layer 20 is positioned on one surface 10EA of the elastic section 10E. The elastic section 10E has a portion that is elastically deformable together with the electroless plating layer 20.

## Description

### Technical Field

The present invention relates to a member that includes a base material and an electroless plating layer, an electric/electronic component that includes the member, a device that includes the electric/electronic component, and a member-manufacturing method for manufacturing the above-described member.

### Background Art

As a pretreatment method for plating the surface of a high polymer material through a wet process, nowadays, a method including a cleaning step, a surface roughening step, and a catalyst applying step is generally known. However, in the case where a treatment target member on which a plating treatment is to be performed includes a high polymer material, it is required that an appropriate pretreatment be performed.

As an example of such pretreatment, a method of pretreatment for plating is described in PTL 1. With this method, in order to plate a high polymer material in which a carbon-hydrogen bond is included in a molecular structure, an active energy ray is radiated to the high polymer material in an atmosphere containing oxalyl chloride [(COCl)₂], and then, the high polymer material having been radiated is brought into contact with water.

### Citation List

### Patent Literature

PTL1: Japanese Unexamined Patent Application Publication No. 2006-37185

### Summary of Invention

### Technical Problem

Oxalyl chloride used for the method described in PTL 1 strongly reacts when brought into contact with water and produces hydrogen chloride. From the viewpoint of industrial manufacture, there is a room for improvement in pretreatment using a substance that cannot be considered to be chemically stable as described above. Furthermore, ease of introduction of a chlorocarbonyl group to the surface of the treatment target member using oxalyl chloride is influenced by a composition of a material included in the surface of the treatment target member (high polymer material in PTL 1). In particular, in the case where the material included in the surface of the treatment target member includes an element such as sulfur that has different reactivity from that of, for example, carbon, it is not easy to form a plated layer on the treatment target member.

The present invention provides a member in which a target member for plating treatment is a base material including an elastic section including a sulfur-containing elastic body and which has appropriate conductivity. The present invention also provides an electric/electronic component that includes the above-described member, a device that includes the above-described electric/electronic component, and a member-manufacturing method for manufacturing the above-described member.

### Solution to Problem

According to a first aspect of the present invention provided for addressing the above-described problem, a member includes a base material and an electroless plating layer. The base material includes an elastic section that includes a sulfur-containing elastic body. The electroless plating layer is provided on the elastic section of the base material. The elastic section has a portion that is elastically deformable together with the electroless plating layer. The member has conductivity and elastically deformable.

The sulfur-containing elastic body may include vulcanized rubber.

The electroless plating layer may include one or two or more elements selected from the group consisting of Au, Ag and Cu.

According to a second aspect of the present invention, an electric/electronic component includes the above-described member.

This electric/electronic component may also include an electric contact. At least part of the electric contact includes the electroless plating layer included in the member. The electric/electronic component may include at least one of a deformable portion and a slidable portion, and the elastic section included in the member may be deformed during use.

According to a third aspect of the present invention, an electric/electronic device includes the above-described electric/electronic component.

According to a fourth aspect of the present invention, a member-manufacturing method for manufacturing the above-described member includes a step of oxidizing and a step of plating. In the step of oxidizing, oxidizing treatment which increases oxygen concentration near a surface of the elastic section of the base material is performed. In the step of plating, electroless plating treatment is performed on the surface of the elastic section on which the oxidizing treatment has been performed in the step of oxidizing. Since the step of oxidizing is included, adhering property of the electroless plating layer formed by the electroless plating treatment to the surface of the elastic section can be increased.

The oxidizing treatment may include an ultraviolet radiation treatment in which ionizing radiation including an ultraviolet ray is radiated to the surface of the elastic section. The ultraviolet radiation treatment may be performed by using an excimer light source.

Sulfur in the sulfur-containing elastic body included in the elastic section may be oxidized in the oxidizing treatment. Regarding this, it is preferable in some case that a spectrum obtained by measuring by using an X-ray photoelectron spectroscopy the surface of the elastic section of the base material having undergone the step of oxidizing have a plurality of peaks based on S2p, and a proportion of one peak of the plurality of peaks attributed to SO₂ in a sum of another peak of the plurality of peaks attributed to S and the one peak attributed to SO₂ be 0.45 or larger in area.

In some cases, it is preferable that the above-described proportion be 1 or larger.

In some cases, it is preferable that, when the surface of the elastic section of the base material having undergone the step of oxidizing is etched by argon sputtering by 5 nm calculated based on an SiO₂ sputter time and composition analysis is performed on the obtained surface by an X-ray photoelectron spectroscopy, O content be 20 atomic % or larger.

In some cases, it is preferable that, when the surface of the elastic section of the base material having undergone the step of oxidizing is etched by the argon sputtering by 25 nm calculated based on the SiO₂ sputter time and the composition analysis is performed on the obtained surface by the X-ray photoelectron spectroscopy, the O content be 20 atomic % or larger.

Herein, a deformable portion refers to a component at least part of which is deformed in some cases during use, and a slidable portion refers to a component the relative position of which changes while being in contact with another component during use in some cases. It should be understood that the Summary of the Invention having been described does not list all the required features of the present invention, and sub-combinations of those groups of the features can be included in the invention.

### Advantageous Effects of Invention

According to the present invention, the member is provided. This member is the base material including the elastic section including the elastic body such as, for example, rubber and has good conductivity. Furthermore, according to the present invention, the electric/electronic component that includes the above-described member, the electric/electronic device that includes the above-described electric/electronic component, and the member-manufacturing method for manufacturing the above-described member are also provided.

### Brief Description of Drawings

Fig. 1 is a sectional view conceptually illustrating the structure of a base material according to an embodiment of the present invention.
Fig. 2 includes sectional views conceptually illustrating the structure of a contact switch as an example of the electric/electronic component according to the embodiment of the present invention.
Fig. 3 is a sectional view conceptually illustrating the structure of a connector as another example of the electric/electronic component according to the embodiment of the present invention.
Fig. 4 is a sectional view conceptually illustrating the structure of the connector as the other example of the electric/electronic component according to the embodiment of the present invention.
Fig. 5 is an XPS spectrum at a measurement surface before light radiation is performed.
Fig. 6 is an XPS spectrum at the measurement surface after the light radiation has been performed for 3 minutes.
Fig. 7 is an XPS spectrum at the measurement surface after the light radiation has been performed for 9 minutes.
Fig. 8 is an XPS spectrum at the measurement surface after the light radiation has been performed for 12 minutes.
Fig. 9 is a graph illustrating the relationships between the proportion of the area of the first peak, the proportion of the area of the second peak, and the light radiation time.
Fig. 10 is a depth profile of the measurement surface before the light radiation is performed.
Fig. 11 is a depth profile of the measurement surface after the light radiation has been performed for 3 minutes.
Fig. 12 is a depth profile of the measurement surface after the light radiation has been performed for 6 minutes.
Fig. 13 is a depth profile of the measurement surface after the light radiation has been performed for 15 minutes.
Fig. 14 is a graph illustrating measurement results of the sheet resistance of a plated surface of a member.
Fig. 15 is a graph illustrating the relationship between a proportion RS₁ of the area of the first peak and the sheet resistance of a plated surface of the member.
Fig. 16 includes images (an entire image and a magnified image) illustrating the appearance of the plated surface when the light radiation is not performed.
Fig. 17 includes images illustrating the appearance of the plated surface when the light radiation is performed for 3 minutes.
Fig. 18 includes images illustrating the appearance of the plated surface when the light radiation is performed for 6 minutes.
Fig. 19 includes images illustrating the appearance of the plated surface when the light radiation is performed for 9 minutes.
Fig. 20 includes images illustrating the appearance of the plated surface when the light radiation is performed for 12 minutes.
Fig. 21 is an observation image of the section on the plated surface side of the member when the light radiation is not performed.
Fig. 22 is an observation image of the section on the plated surface side of the member when the light radiation is performed for 3 minutes.
Fig. 23 is an observation image of the section on the plated surface side of the member when the light radiation is performed for 6 minutes.
Fig. 24 is an observation image of the section on the plated surface side of the member when the light radiation is performed for 9 minutes.
Fig. 25 is an observation image of the section on the plated surface side of the member when the light radiation is performed for 12 minutes.
Fig. 26 is a graph illustrating the repulsive force of the member manufactured in an example.
Fig. 27 is a graph illustrating the resistance of a member (Cu thickness: 0.34 µm) manufactured in an example.
Fig. 28 is a graph illustrating the resistance of the member (Cu thickness: 0.68 µm) manufactured in the example.
Fig. 29 is a graph illustrating the repulsive force of the member (Cu thickness: 0.97 µm) manufactured in the example.
Fig. 30 is a graph illustrating the relationship between the compression rate and variation RR of a resistance rate per pressing of the member manufactured in the example.

### Description of Embodiments

Although the present invention will be described below by describing an embodiment of the invention, the following embodiment should not limit the invention according to the scope of the claims. It should also be appreciated that not all of combinations of features described in the embodiment are necessarily required for solutions of the invention.

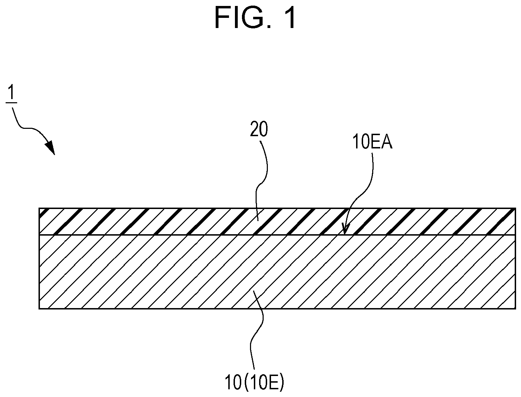

Fig. 1 is a sectional view conceptually illustrating the structure of a base material according to an embodiment of the present invention. A member 1 according to the embodiment of the present invention includes a base material 10 having an elastic section 10E containing a sulfur-containing elastic body and an electroless plating layer 20 provided on the elastic section 10E of the base material 10. The base material 10 illustrated in Fig. 1 is entirely formed of the elastic section 10E, and the electroless plating layer 20 is positioned on one surface 10EA of the elastic section 10E.

The material of the elastic section 10E of the base material 10 is not limited as long as the material contains sulfur and has elasticity. Specific examples of the material of the elastic section 10E includes a rubber-based material a cross-linker of which contains sulfur (vulcanized rubber). Examples of the rubber material being a main component that provides elasticity include, for example, the following rubber: rubber such as diene-based rubber (specific examples of the diene-based rubber include isoprene rubber, butadiene rubber, styrene-butadiene rubber, chloroprene rubber, nitrile rubber, polyisobutylene, and so forth) a main chain of which includes an unsaturated bond; rubber having a polymethylene-type saturated main chain such as acrylic-based rubber, fluorine-based rubber, and chlorinated polyethylene; and silicone-based rubber. An elastic material that is not rubber but an elastomer may be additionally contained in the elastic section 10E. Examples of such a material include, for example, block copolymer such as styrene-based block copolymer.

The base material 10 may include a section (non-elastic section) other than the elastic section 10E. The non-elastic section may be formed of an insulating material or a conductive material. The non-elastic section may be formed of a plurality of members.

It is sufficient that at least part of the electroless plating layer 20 be formed by electroless plating. The electroless plating layer 20 may have a laminate structure. Examples of the laminate structure include a structure including a copper plating layer formed by electroless plating and a nickel/gold plating layer formed on the copper plating layer by electroplating.

In some cases, it is preferable that the electroless plating layer 20 include one or two or more elements selected from the group consisting of Au, Ag and Cu. When such an element or elements are included in the electroless plating layer 20, the conductivity of the electroless plating layer 20 is likely to increase. Thus, the member 1 easily functions as a conductive member.

The thickness of the electroless plating layer 20 is not limited. Non-limiting examples of ranges of the thickness of the electroless plating layer 20 include a range from 0.01 to 10 µm. When the thickness of the electroless plating layer 20 is excessively small, it may be difficult for the electroless plating layer 20 to stably provide conductivity to the member 1. When the thickness of the electroless plating layer 20 is excessively large, a possibility of a time period or the cost required to form the electroless plating layer 20 excessively increasing may increase or a possibility of the electroless plating layer 20 reducing the elasticity of the entirety of the member 1 may increase. From the viewpoint of appropriately realizing the conductivity of the member 1 based on the electroless plating layer 20 and realizing appropriate elastic deformation of the entire member 1, the range of the thickness of the electroless plating layer 20 is preferably 0.1 to 6 µm in some cases, more preferably 0.2 to 3 µm in other cases, and particularly preferably 0.3 to 1.5 µm in still other cases. With the electroless plating layer 20 having a thickness of 1 µm or larger, in some cases the conductivity of the electroless plating layer 20 is unlikely to vary even when another member is repeatedly brought into pressure contact with the member 1.

The surface 10EA of the elastic section 10E of the base material 10 where the electroless plating layer 20 is formed is not necessarily entirely coated with a deposit resulting from electroless plating treatment ("plating deposit" hereafter). For example, the electroless plating layer 20 may be formed by the entirety of a group of portions of the plating deposit disposed similar to islands on the surface 10EA.

In the member 1 according to the embodiment of the present invention, the elastic section 10E has a portion that can be elastically deformed together with the electroless plating layer 20. This reduces variation in conductivity of the surface of the member 1 on the electroless plating layer 20 side even when a compression operation in which the surface of the member 1 on the electroless plating layer 20 side is pressed is performed is performed. Specifically, a resistance increase rate of the member 1 according to the embodiment of the present invention may be 30% or smaller when a compression rate of the member 1 in the compression operation is 30% and this compression operation is performed 20 times. Here, the compression rate is calculated as follows: [Unit: %, {(thickness of member 1 before compression operation) - (thickness of member 1 under maximum compression amount in compression operation)}/(thickness of member 1 before compression operation) × 100]. When this compression operation of 30% is performed 20 times, this is referred to as "20 times-30% compression operation" hereafter. Even when the number of times of compression or the compression rate in the compression operation varies, this representation of the compression operation is similarly used by changing the value representing the number of times corresponding to the varied number of times or changing the percentage corresponding to the varied compression rate. The resistance increase rate is calculated as follows: [Unit: %, {(resistance of electroless plating layer 20 of member 1 under maximum compression in 11 times-30% compression operation) - (resistance of electroless plating layer 20 of member 1 under maximum compression in 20 times-30% compression operation)}/(resistance of electroless plating layer 20 of member 1 under maximum compression in 11 times-30% compression operation) × 100]. The resistance increase rate is preferably 20% or smaller in some cases, more preferably 15% or smaller in other cases, and further more preferably 10% or smaller in still other cases, and particularly preferably 5% or smaller in still other cases.

The resistance increase rate of the member 1 according to the embodiment of the present invention in repetitive 40% compression operation may be 10% or smaller, and is preferably be 8% or smaller in some cases. The resistance increase rate of the member 1 according to the embodiment of the present invention in repetitive 50% compression operation may be 18% or smaller, and is preferably 15% or smaller in some cases.

The fact that the resistance increase rate observed after the compression operation has been repeatedly performed is small as described above indicates that the electroless plating layer 20 appropriately adheres to the surface of the elastic section 10E of the base material 10 even the compression operation is repeatedly performed. The resistance increase rate tends to increase when cracking or chipping occurs in the electroless plating layer 20 due to the compression operation.

An electric/electronic component according to the embodiment of the present invention includes the member according to the embodiment of the present invention.

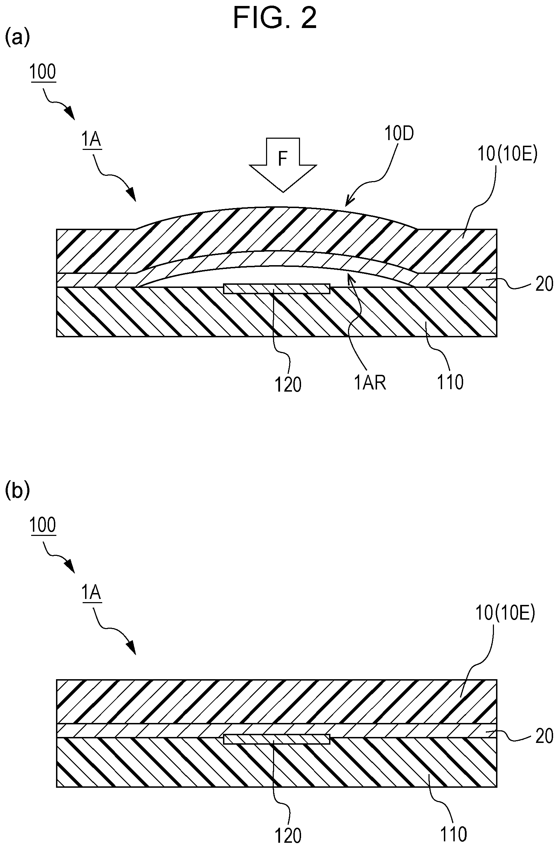

Fig. 2 includes sectional views conceptually illustrating the structure of a contact switch as an example of the electric/electronic component according to the embodiment of the present invention. As illustrated in Fig. 2(a), a contact switch 100 according to the embodiment of the present invention includes a member 1A according to the embodiment of the present invention and a substrate 110. The member 1A includes the base material 10 entirely formed by the elastic section 10E and the electroless plating layer 20 provided on the one surface of the elastic section 10E.

The elastic section 10E has a deformable portion 10D that projects on the one surface side and is recessed on the other surface side. The electroless plating layer 20 is provided on the surface on the recessed side of the deformable portion 10D. Thus, in the deformable portion 10D of the elastic section 10E, the member 1A has a recessed portion 1AR where the electroless plating layer 20 is recessed relative to the other portion than the recessed portion 1AR.

The substrate 110 is positioned so as to be in contact with the surface of the member 1A on the electroless plating layer 20 side. An electrode 120 is provided at a position of the base material 110 facing the recessed portion 1AR of the member 1A. Thus, in a state illustrated in Fig. 2(a), the electroless plating layer 20 and the electrode 120 are not in electric contact with each other.

Here, as indicated by an arrow illustrated in Fig. 2(a), when a force F that causes the member 1A and the substrate 110 to be closer to each other is applied to the projecting surface of the deformable portion 10D, the deformable portion 10D of the elastic section 10E is elastically deformed. As a result, as illustrated in Fig. 2(b), the size of the recess of the recessed portion 1AR of the member 1A reduces. This brings the electroless plating layer 20 and the electrode 120 into contact with each other, and electric connection between these starts.

When the force F in the arrow direction is canceled, the state of the deformable portion 10D is restored to the state illustrated in Fig. 2(a) by elastic recovery. Thus, the electric connection between the electroless plating layer 20 and the electrode 120 ends.

In this way, the contact switch 100 can perform operation of a momentary switch as follows: the electric connection between the electroless plating layer 20 and the electrode 120 is maintained during application of the force F in the arrow direction; and when the force F is canceled, the electric connection ends.

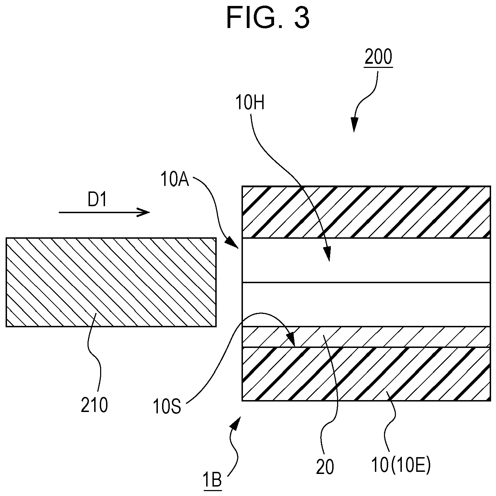

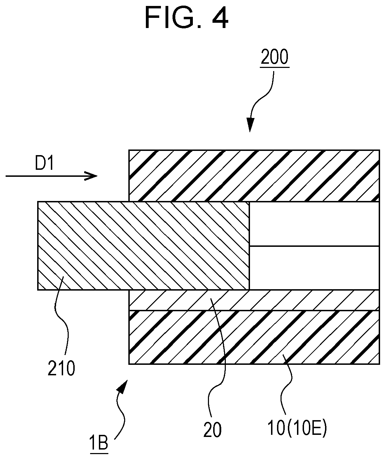

Figs. 3 and 4 are sectional views conceptually illustrating the structure of a connector as another example of the electric/electronic component according to the embodiment of the present invention. As illustrated in Fig. 3, a connector 200 according to the embodiment of the present invention includes a member 1B that includes the base material 10 and the electroless plating layer 20. The base material 10 has the elastic section 10E. The elastic section 10E has a cylindrical shape having a hollow 10H that is open at both ends. The electroless plating layer 20 is provided on part of an inner side surface 10S of the elastic section 10E defining the hollow 10H.

A pin 210 formed of a conductive material is inserted from one opening 10A of the hollow 10H into the hollow 10H (in an arrow D1 direction illustrated in Fig. 3) of the connector 200. As a result, as illustrated in Fig. 4, a side surface of the pin 210 positioned in the connector 200 and the surface of the electroless plating layer 20 slide against each other. This brings the pin 210 and the electroless plating layer 20 into electric contact with each other. In so doing, preferably, by appropriately setting the outer diameter of an insertion portion of the pin 210 and the diameter of the hollow 10H of the elastic section 10E, the elastic section 10E is elastically deformed by inserting the pin 210 such that the diameter of the hollow 10H of the elastic section 10E is slightly increased. In this case, an elastic recovery force acts from the inner side surface 10S of the elastic section 10E to the side surface of the pin 210. Due to this elastic recovery force, the connector 200 is engaged with the pin 210. Thus, the electric contact between the pin 210 and the electroless plating layer 20 can be stabilized.

In this way, with an assembly of the connector 200 and the pin 210, maintaining of the electric connection between the connector 200 and the pin 210 is realized.

As described above, the electric/electronic component according to the embodiment of the present invention includes the member according to the embodiment of the present invention. The elastic section of the base material of the member has a portion that is deformable during use. Thus, the electric/electronic component according to the embodiment of the present invention includes an elastically deformable conductive portion. Accordingly, the electric/electronic component according to the embodiment of the present invention can realize switching between electrically contact state and electrically non-contact state with a simple structure or stably realize electric contact with another conductive member. In a specific example of the electric/electronic component according to the embodiment of the present invention, the electric/electronic component includes an electric contact portion that is at least partially formed of the electroless plating layer included in the member according to the embodiment of the present invention. In another specific example of the electric/electronic component according to the embodiment of the present invention, the electric/electronic component includes at least one of a deformable portion and a slidable portion, and the elastic section included in the member according to the embodiment of the present invention is deformed during use.

An electric/electronic device according to the embodiment of the present invention includes the electric/electronic component according to the embodiment of the present invention. As described above, the electric/electronic component according to the embodiment of the present invention includes the member that includes the elastic section 10E and the electroless plating layer 20 provided on the elastic section 10E. The elastic section 10E is deformable during use. Accordingly, in the electric/electronic device according to the embodiment of the present invention, control of electric contact can be simply and/or stably performed. Specific examples of the electric/electronic device according to the embodiment of the present invention include portable electronic devices such as smartphones, tablet terminals, notebook computers, and smart watches, transport apparatuses such as automobiles, airplanes, and ships, electric household appliances such as television sets, refrigerators, washing machines, and cleaners, and industrial machines such as processing apparatuses, generators, and transformers.

A member-manufacturing method for manufacturing the member according to the embodiment of the present invention is not limited. The member according to the embodiment of the present invention can be efficiently obtained when the member is manufactured by a method described below.

The member-manufacturing method for manufacturing the member according to the embodiment of the present invention includes an oxidizing step and a plating step.

In the oxidizing step, oxidizing treatment that increases oxygen concentration near the surface of the elastic section 10E of the base material 10 is performed. Such oxidizing treatment facilitates adhesion of a catalyst used in the electroless plating treatment to the surface of the elastic section 10E or improves the adhering property of the plating deposit to the elastic section 10E. Thus, the electroless plating layer 20 can be appropriately formed on the surface of the elastic section 10E.

The details of the oxidizing treatment are not limited. Ultraviolet (UV) radiation treatment that will be described in detail next may be performed on the surface of the elastic section 10E, the surface of the elastic section 10E may be exposed to plasma including oxygen, or the surface of the elastic section 10E may be brought into contact with a composition including an oxidizing agent such as hydrogen peroxide.

In the UV radiation treatment, ionizing radiation including ultraviolet rays is radiated to the surface of the elastic section 10E. Examples of the ionizing radiation other than ultraviolet rays include, for example, X-rays, γ-rays, electron rays, and neutron rays. The ionizing radiation may include visible rays or electromagnetic waves of a smaller wavelength than that of the visible rays. A radiation source (light source) for performing the UV radiation treatment is not limited. Examples of the radiation source include, for example, a so-called UV lamp, an excimer UV lamp and an excimer laser, a radiation tube, and an electron gun. Among these, the excimer UV lamp is preferable in some cases from the viewpoint of high handleability and high treatment efficiency. In the case of pretreatment in which the radiation of the excimer UV lamp is performed, the amount of substances on the surface of the elastic section 10E to be removed based on the radiation is substantially negligible.

Preferably, sulfur in the sulfur-containing elastic body is oxidized in the oxidizing treatment in which a variety of substances included in the elastic section 10E are oxidized. Whether or not the sulfur in the sulfur-containing elastic body is oxidized can be checked by analyzing the surface or a region near the surface (region immediately below the surface) of the elastic section 10E having undergone the oxidizing treatment. Although a surface analyzation method for this purpose is not limited, examples of a preferable method include an X-ray photoelectron spectroscopy by which a chemical state of the sulfur can be checked. In accordance with a spectrum that can be obtained by the X-ray photoelectron spectroscopy (referred to as "XPS spectrum" hereafter), the following can be obtained: a composition analysis of the measured surface (identification of types of elements existing therein and measurement of the existence concentration of the elements); qualitative/quantitative measurement of the chemical state of the elements; and measurement of composition change in the depth direction (a graph obtained by this analysis may be referred to as "depth profile" hereafter) by combining with sputtering performed on a region to be measured.

Hereafter, results of the oxidizing treatment performed on the surface of the elastic section 10E of the base material 10 formed of nitrile rubber by using an excimer UV lamp ("H0522" made by USIO INC., central wave length: 172 nm, irradiance: 6 mW/cm²) are described. A transmission distance from the excimer UV lamp to the surface of the elastic section 10E (referred to as "measurement surface" hereafter) where light from the excimer UV lamp arrives was 3 mm. The radiation of the light was performed in the atmosphere.

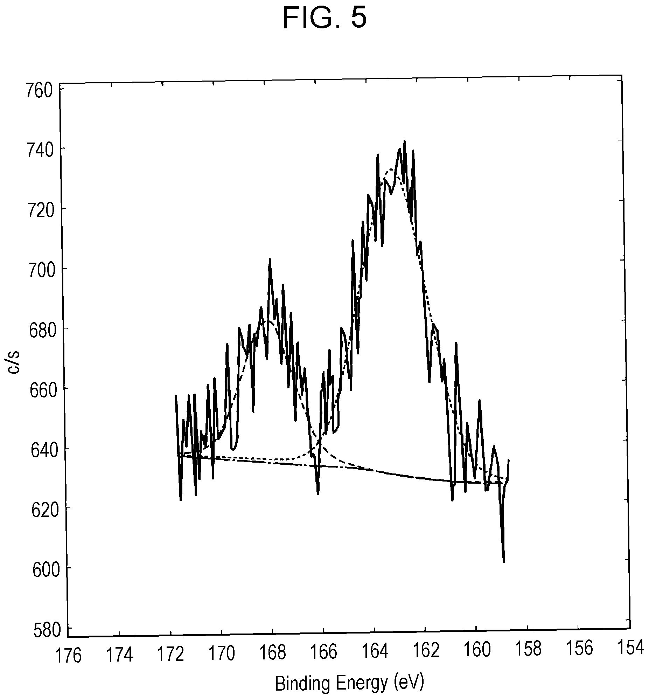

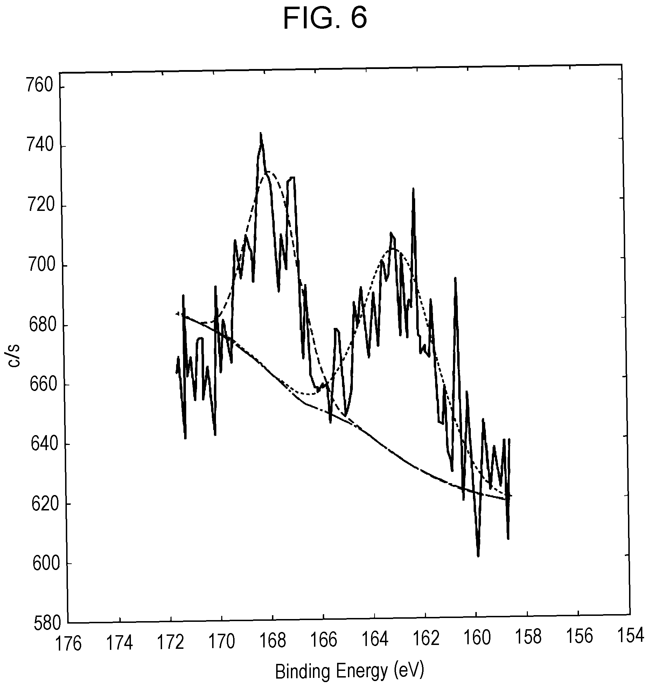

Fig. 5 is an XPS spectrum (binding energy range: from 154 to 176 eV) at the measurement surface before the light radiation is performed. As illustrated in Fig. 5, a peak peaked at about 162 eV (first peak) and a peak peaked at about 168 eV (second peak) are recognized in the XPS spectrum. The first peak is a peak of S2p and attributed that the first peak is derived from S in accordance with the chemical shift. The second peak is a peak of S2p and attributed that the second peak is derived from SO₂ in accordance with the chemical shift. Fitting of the peaks and a baseline for the first peak and second peak is performed. Referring to Fig. 5, a solid line indicates the measurement result, a dotted line indicates a fitting line of the first peak, a broken line indicates a fitting line of the second peak, and a one-dot chain line indicates a baseline of these fitting lines. These representations are also applicable to Figs. 6 to 8. Areas of the peaks are calculated based on the respective fitting lines and the baseline. A proportion RS₁ of the first peak in the sum of the first peak and the second peak in area and a proportion RS₂ of the second peak in the sum of the first peak and the second peak in area are calculated. The results are illustrated in Table 1. RS₁ is 0.74 and RS₂ is 0.26. That is, out of sulfur existing at the measurement surface, the abundance ratio of sulfur in a state of SO₂ to sulfur in a state of S is about 1/3.

**[Table 1]**

| Radiation time (minutes) | RS₁ | RS₂ |
|---|---|---|
| 0 | 0.74 | 0.26 |
| 3 | 0.60 | 0.40 |
| 9 | 0.49 | 0.51 |
| 12 | 0.35 | 0.65 |

Fig. 6 is an XPS spectrum (binding energy range: from 154 to 176 eV) at the measurement surface after the light radiation has been performed for 3 minutes. As illustrated in Fig. 6 and Table 1, similarly to the measurement surface before the light radiation, the first peak and the second peak are recognized in the XPS spectrum. However, the intensity of the second peak increases compared to that before the light radiation. RS₁ is 0.60 and RS₂ is 0.40. That is, out of sulfur existing at the measurement surface, the abundance ratio of sulfur in the state of SO₂ to sulfur in the state of S is about 2/3.

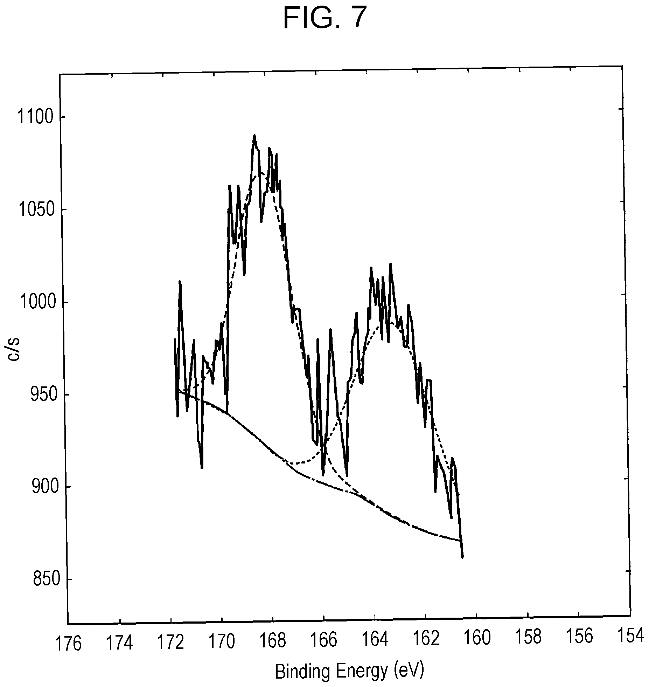

Fig. 7 is an XPS spectrum (binding energy range: from 154 to 176 eV) at the measurement surface after the light radiation has been performed for 9 minutes. As illustrated in Fig. 7 and Table 1, similarly to the measurement surface before the light radiation, the first peak and the second peak are recognized in the XPS spectrum. However, the intensity of the second peak increases compared to that in the case where the light radiation *is performed for 3 minutes. RS₁ is 0.49 and RS₂ is 0.51. That is, out of sulfur existing at the measurement surface, the abundance ratio of sulfur in the state of SO₂ to sulfur in the state of S is about 1.

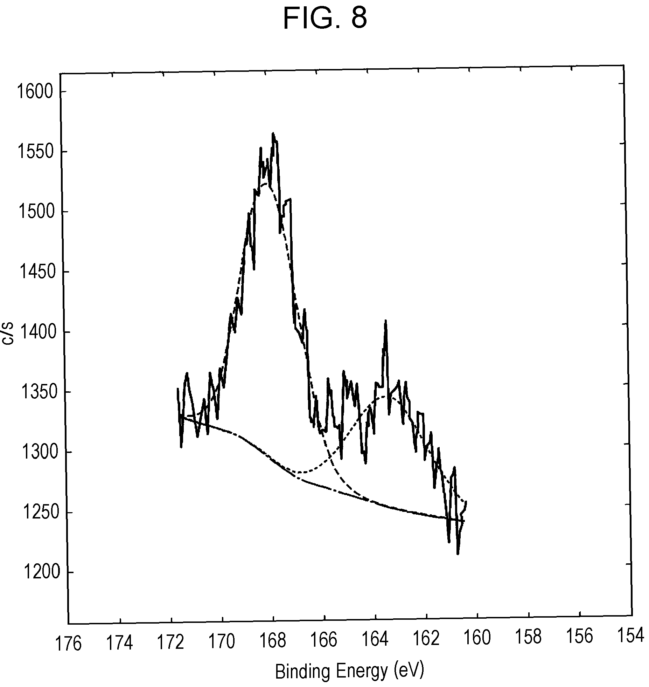

Fig. 8 is an XPS spectrum (binding energy range: from 154 to 176 eV) at the measurement surface after the light radiation has been performed for 12 minutes. As illustrated in Fig. 8 and Table 1, similarly to the measurement surface before the light radiation, the first peak and the second peak are recognized in the XPS spectrum. RS₁ is 0.65 and RS₂ is 0.35. That is, regarding sulfur in the state of SO₂, the abundance ratio of sulfur in the state of SO₂ to sulfur in the state of S is about 2 (about 2 times).

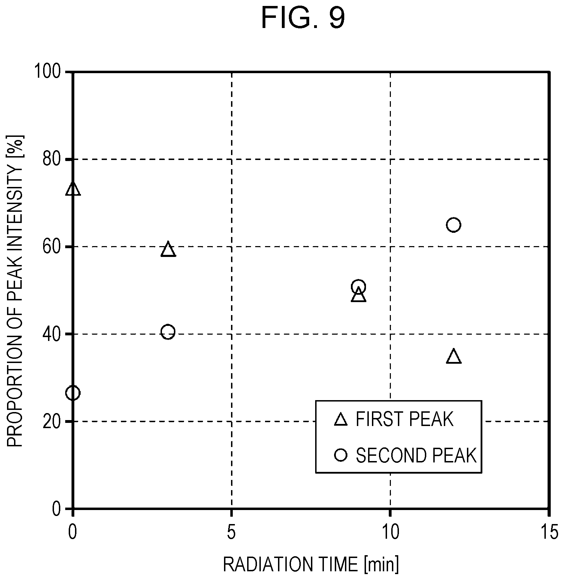

Fig. 9 is a graph illustrating the relationships between the proportion of the area of the first peak, the proportion of the area of the second peak, and the light radiation time. As illustrated in Fig. 9, it has been verified that, as the radiation time increases, the proportion RS₂ of the area of the second peak derived from SO₂ increases. It has been verified that, when the light radiation is not performed, out of S existing at the surface (measurement surface) of the elastic section 10E, the amount of S only slightly affected by a chemical bond (free S) is larger than the amount of S in the oxidized state (oxidized S), and when the light radiation is performed, this free S is oxidized to become oxidized S. Specifically, it has been verified as follows: when the light radiation is performed for 9 minutes, at the surface (measurement surface) of the elastic section 10E, the abundance ratio of the free S and the abundance ratio of the oxidized S are substantially equal; and when the light radiation is performed for 12 minutes, the amount of the oxidized S is larger than that of the free S.

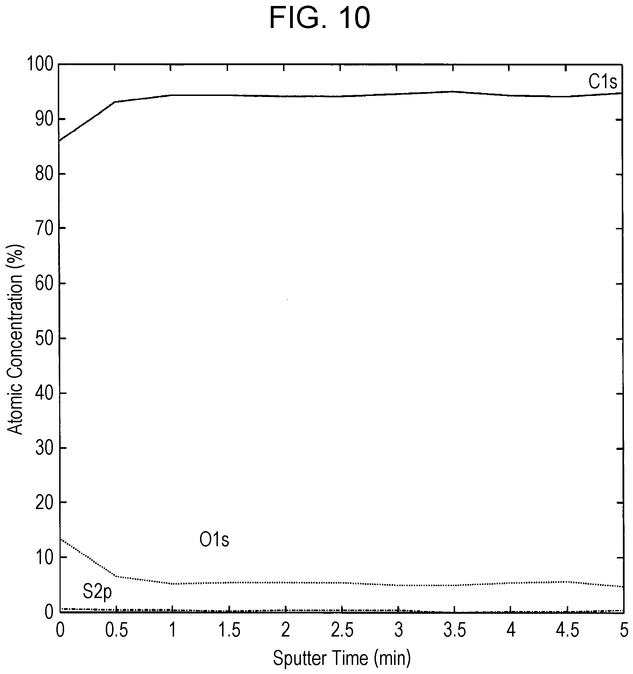

Fig. 10 is a depth profile of the measurement surface before the light radiation is performed. Sputtering performed on the measurement surface to obtain the depth profile is at 5 nm/min calculated based on the SiO₂ sputter time. As illustrated in Fig. 10, when the light radiation is not performed, the existence ratio of O in a near surface region (region to a depth of 25 nm calculated based on the SiO₂ sputter time) of the surface (measurement surface) of the elastic section 10E except for an outermost region (region to a depth of 2.5 nm calculated based on the SiO₂ sputter time) is smaller than 10 atomic %.

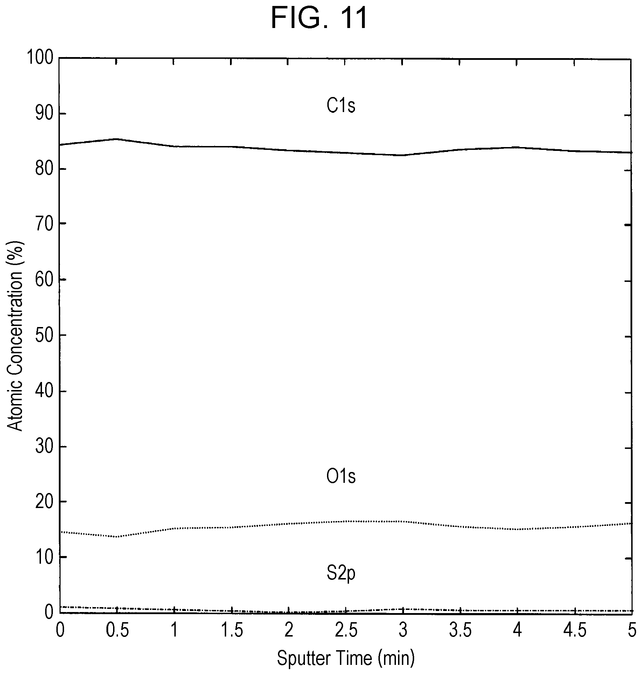

Fig. 11 is a depth profile of the measurement surface after the light radiation has been performed for 3 minutes. As illustrated in Fig. 11, when the light radiation is performed for 3 minutes, the oxygen concentration in the near surface region of the surface (measurement surface) of the elastic section 10E including the outermost region (region to a depth of 2.5 nm) is from 10 to less than 20 atomic %.

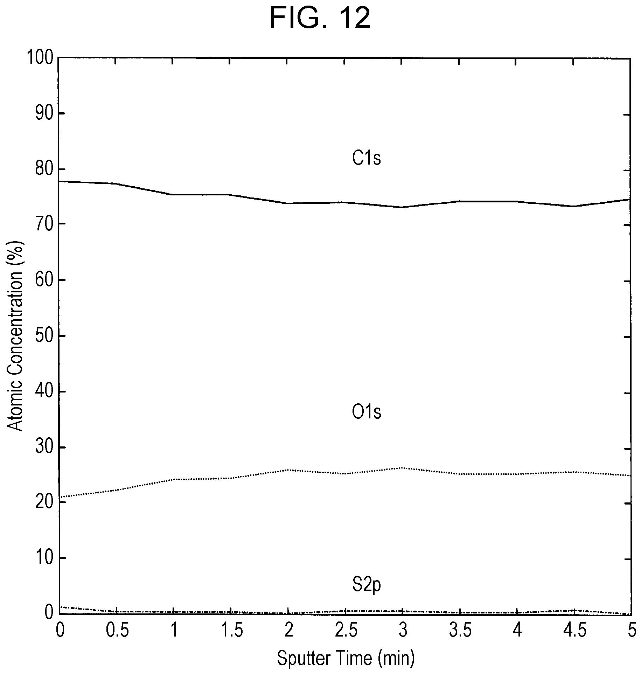

Fig. 12 is a depth profile of the measurement surface after the light radiation has been performed for 6 minutes. As illustrated in Fig. 12, when the light radiation is performed for 6 minutes, the oxygen concentration in the near surface region of the surface (measurement surface) of the elastic section 10E including the outermost region (region to a depth of 2.5 nm) is from 20 to less than 30 atomic %.

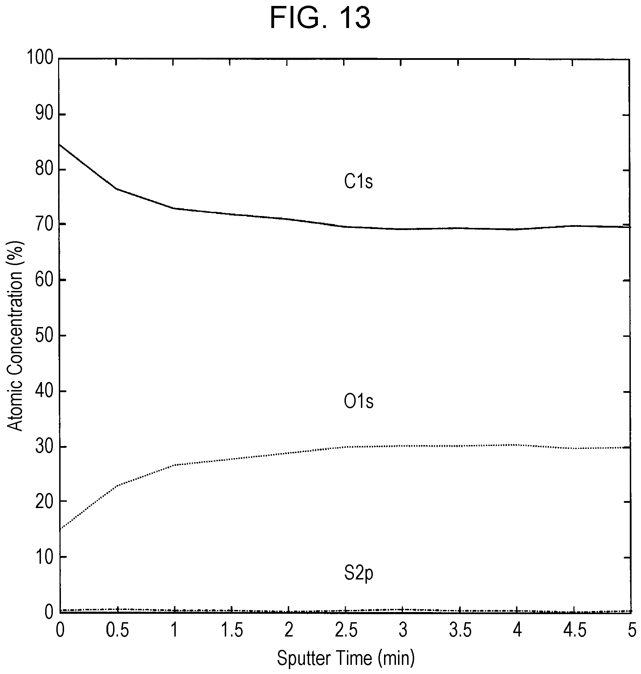

Fig. 13 is a depth profile of the measurement surface after the light radiation has been performed for 15 minutes. As illustrated in Fig. 13, when the light radiation is performed for 15 minutes, the oxygen concentration in the near surface region of the surface (measurement surface) of the elastic section 10E increases from slightly larger than 10 to slightly smaller than 30 atomic % in a region from an outermost part to the depth of 10 nm, and after that, is about 30 atomic %.

As illustrated in Figs. 11 to 13, it has been verified from the depth profiles that the light radiation performed on the surface (measurement surface) of the elastic section 10E increases the oxygen concentration near the measurement surface.

In the plating step, the electroless plating treatment is performed on the surface of the elastic section 10E on which the oxidizing treatment has been performed in the oxidizing step. The type of the electroless plating treatment is not limited. The metallic species to be deposited in the electroless plating treatment are not limited. One or two or more elements selected from the group consisting of Fe, Co, Ni, Pt, Pd, Rh, Au, Ag and Cu may be included. In some cases, it is preferable that one or two or more elements selected from the group consisting of Au, Ag and Cu be included. As long as the electroless plating layer can maintain appropriate conductivity, the electroless plating layer may include a non-metallic element derived from a reducing agent used in depositing P, B, or the like.

Typically in the plating step, pretreatment including, for example, cleaning treatment, degreasing treatment, neutralizing treatment, activation treatment, and catalyst applying treatment is performed before the electroless plating treatment. Specific configurations of the pretreatment and the specific conditions of the treatment included in the pretreatment are appropriately set in accordance with the composition of the material of the elastic section 10E, the type of the electroless plating treatment, and so forth. For example, when the material of the elastic section 10E includes silicone-based rubber, it is preferable in some cases that treatment using tetraethoxysilane or the like be performed after the degreasing treatment and the neutralizing treatment.

The conductivity of a surface (referred to as "plated surface" hereafter) of the member manufactured by the member-manufacturing method according to the embodiment of the present invention, the plated surface being a surface on which the electroless plating treatment had been performed, was verified and a plated side surface of this member was observed in a specific case where the oxidizing treatment in the oxidizing step was performed by the radiation using the excimer UV lamp and the metal element deposited in the electroless plating treatment in the plating step was copper. Results of the verification and the observation are described as follows.

The manufacturing method according to the embodiment of the present invention was performed so as to obtain the member that includes the base material and the electroless plating layer under the following conditions: radiation time of the excimer UV lamp in the oxidizing treatment was varied; and other conditions were the same (the electroless plating treatment was performed and the plating treatment time was 20 minutes).

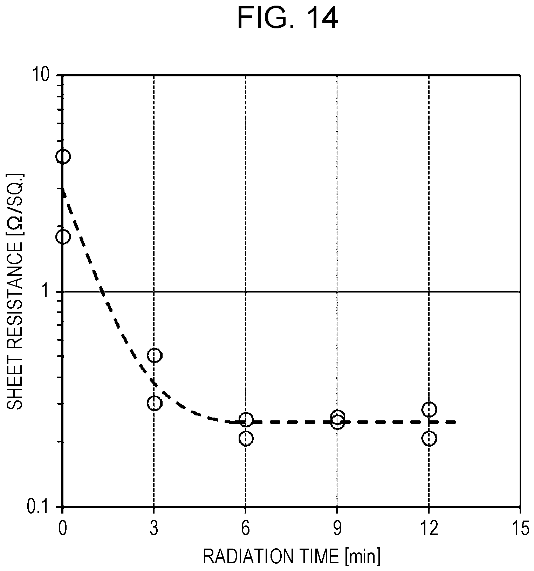

The sheet resistance (unit: Ω/sq.) of the plated surface of the obtained member was measured. Measurement results are illustrated in Table 2 and Fig. 14.

**[Table 2]**

| Radiation time (minutes) | Sheet resistance (Ω/sq.) | | |
|---|---|---|---|
| | Measured value 1 | Measured value 2 | Average |
| O | 4.28 | 1.80 | 3.04 |
| 3 | 0.505 | 0.303 | 0.40 |
| 6 | 0.255 | 0.210 | 0.23 |
| 9 | 0.261 | 0.249 | 0.26 |
| 12 | 0.286 | 0.209 | 0.25 |

As illustrated in Table 2 and Fig. 14, when the excimer UV lamp does not radiate light to the surface of the elastic section 10E, the sheet resistance of the plated surface *is 1 Ω/sq. or larger. However, when the excimer UV lamp radiates the light to the surface of the elastic section 10E, the sheet resistance of the plated surface becomes less than 1 Q/sq. Furthermore, when the radiation time is 6 minutes or larger, the sheet resistance of the plated surface reduces to about 1/10 compared to the case where the excimer UV lamp does not radiate the light to the surface of the elastic section 10E.

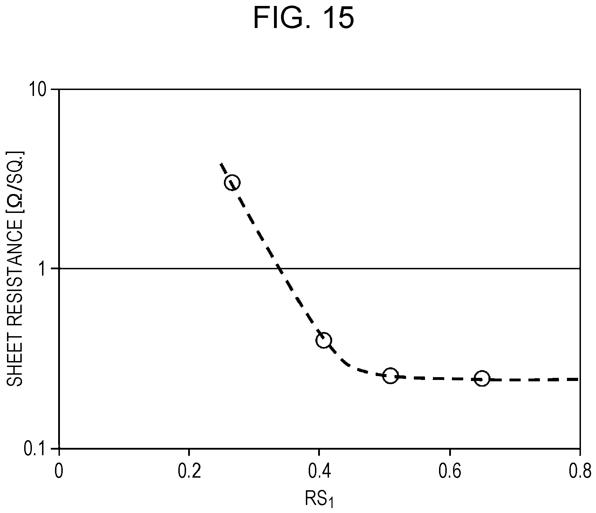

Fig. 15 is a graph illustrating the relationship between the proportion RS₁ and the sheet resistance of the plated surface based on the results illustrated in Tables 1 and 2. As illustrated in Fig. 15, when the proportion RS₁ is 0.3 or larger, the sheet resistance is less than 1 Ω/sq., and when the proportion RS₁ is 0.45 or larger, the sheet resistance is sufficiently reduced. That is, the member that includes the electroless plating layer having sufficient conductivity can be obtained by performing the oxidizing treatment so as to obtain the proportion RS₁ of 0.45 or larger.

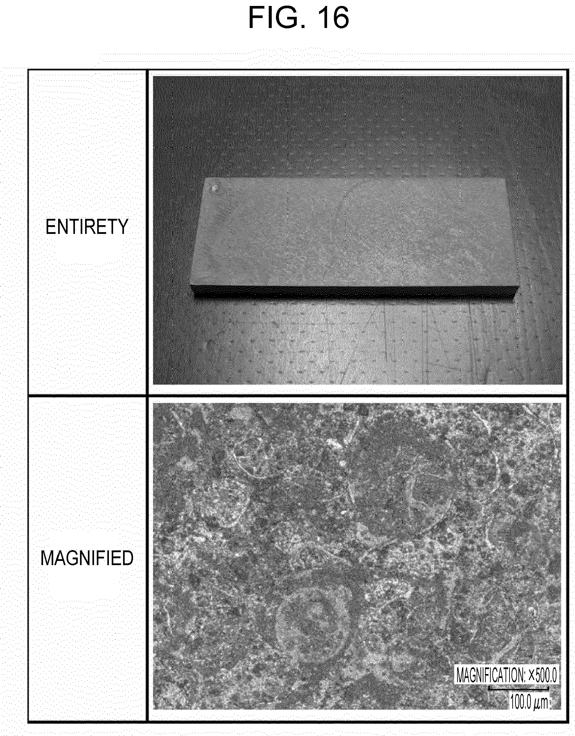

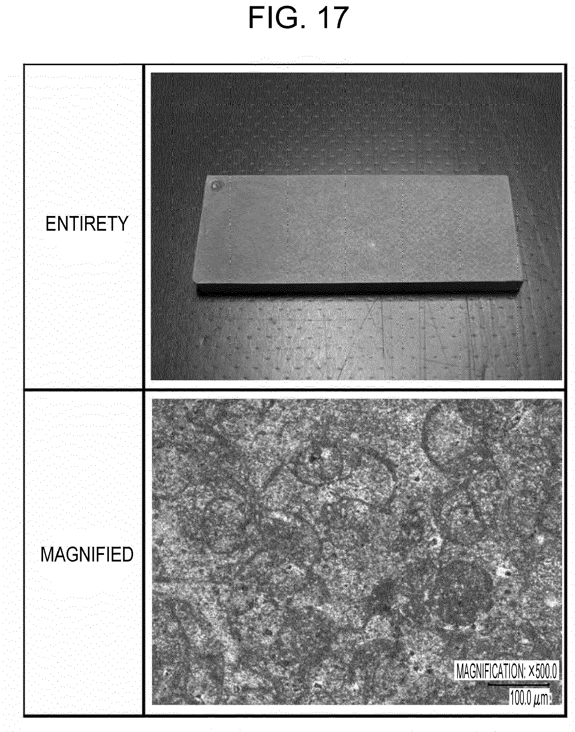

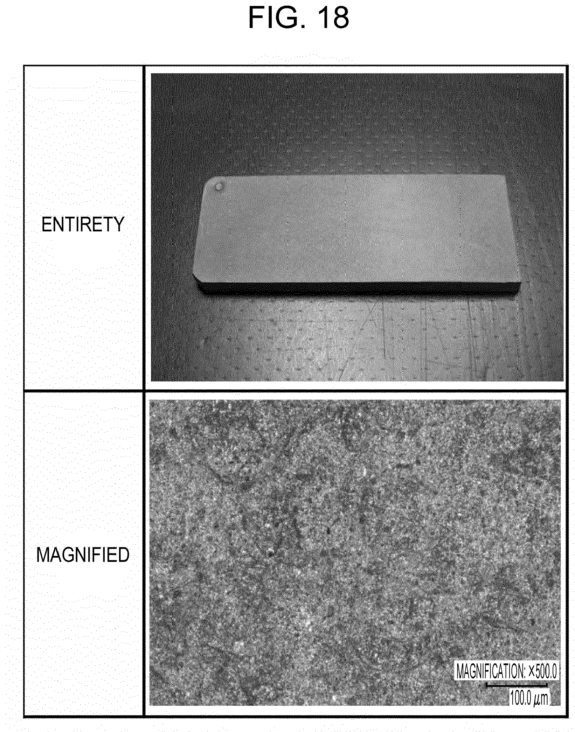

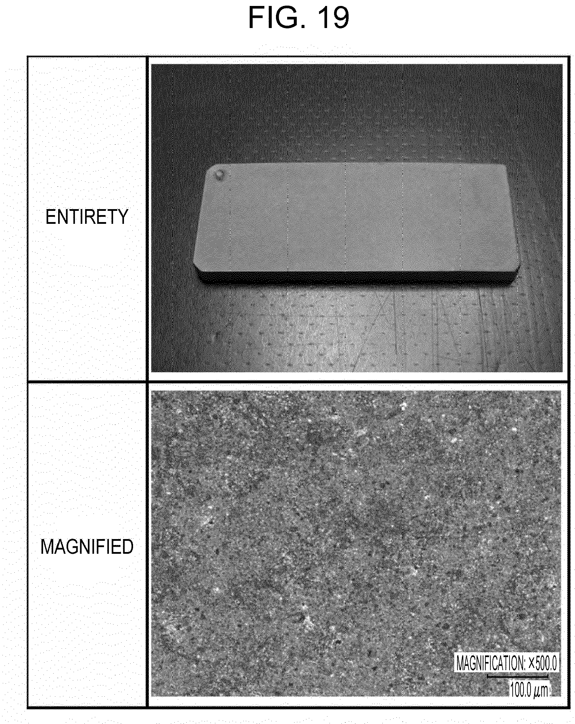

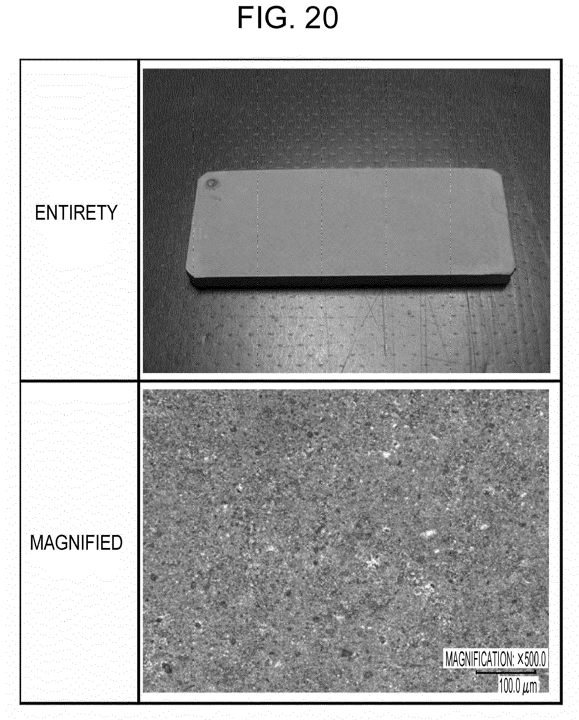

The plated surface of the member is observed. Fig. 16 includes images (an entire image and a magnified image) illustrating the appearance of the plated surface when the light radiation is not performed. Fig. 17 includes images (an entire image and a magnified image) illustrating the appearance of the plated surface when the light radiation is performed for 3 minutes. Fig. 18 includes images (an entire image and a magnified image) illustrating the appearance of the plated surface when the light radiation is performed for 6 minutes. Fig. 19 includes images (an entire image and a magnified image) illustrating the appearance of the plated surface when the light radiation is performed for 9 minutes. Fig. 20 includes images (an entire image and a magnified image) illustrating the appearance of the plated surface when the light radiation is performed for 12 minutes.

As illustrated in Fig. 16, when the light radiation is not performed, nonuniformity in color is found in the entire observation, and portions where the plating is not deposited are found in the magnified observation. As illustrated in Fig. 17, when the light radiation is performed for 3 minutes, nonuniformity in color is substantially not found in the entire observation, and portions where the plating is not deposited are not found in the magnified observation. Nonuniformity in depositing of the plating reduces when the light radiation time increases, and, as illustrated in Figs. 19 and 20, when the light radiation time is 9 minutes or larger, significant differences are not found in the appearance observation.

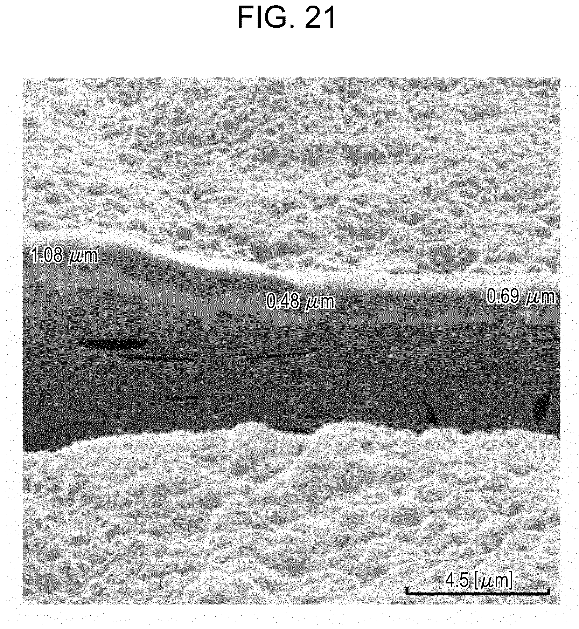

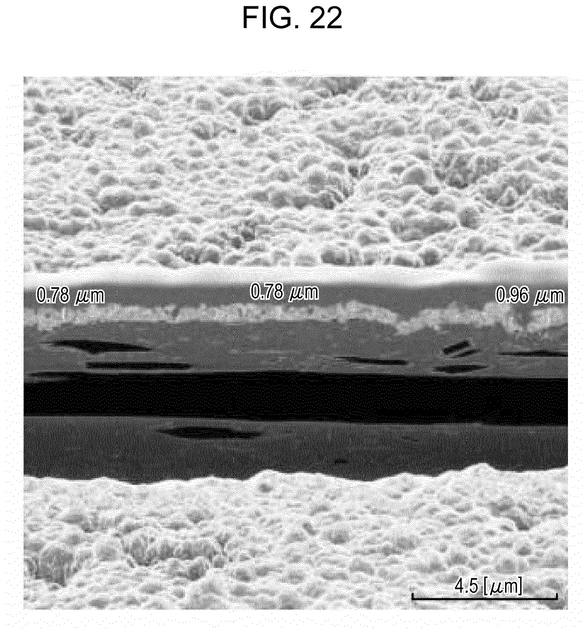

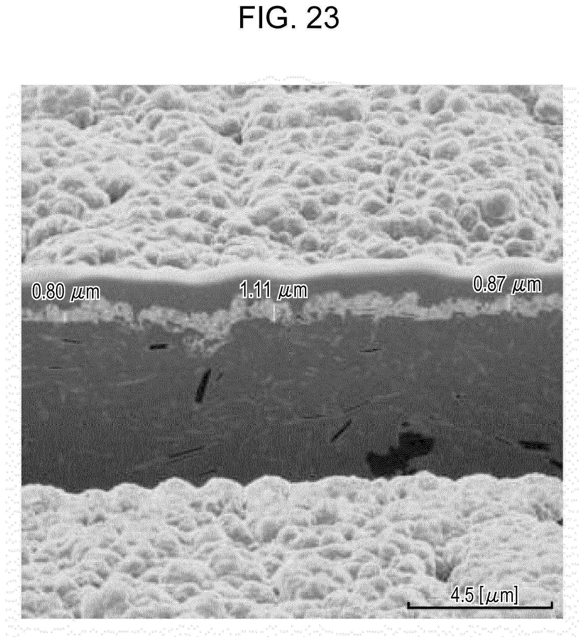

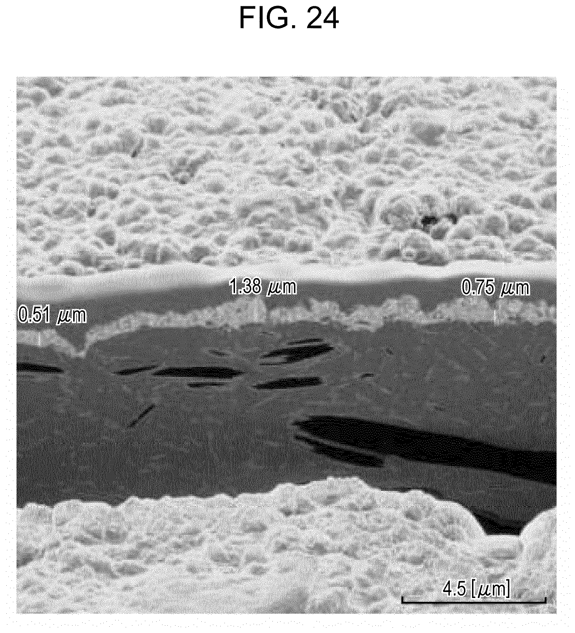

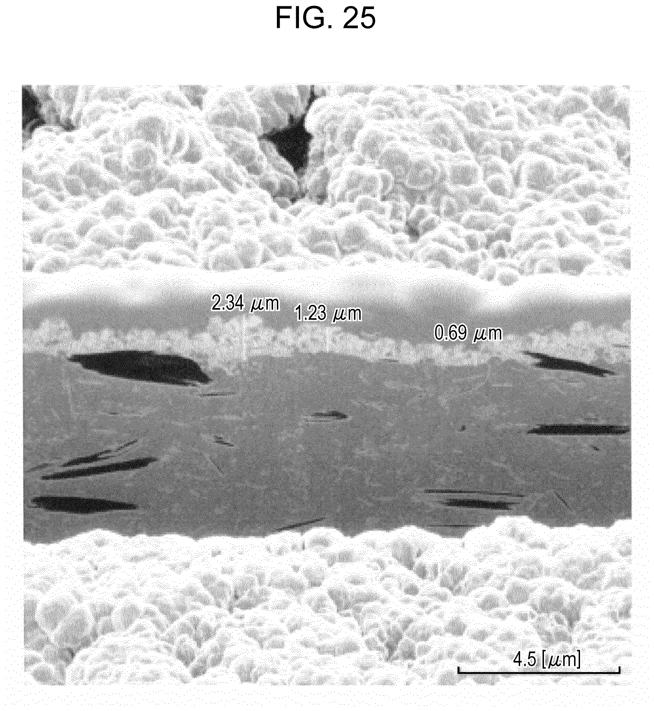

Next, sectional observation was performed on the plated surface side of the member by using a focused ion beam (FIB) method. In order to cut and observe by the FIB method, carbon was accumulated on the plated surface of the member. Fig. 21 is an observation image of the section on the plated surface side of the member when the light radiation is not performed. Fig. 22 is an observation image of the section on the plated surface side of the member when the light radiation is performed for 3 minutes. Fig. 23 is an observation image of the section on the plated surface side of the member when the light radiation is performed for 6 minutes. Fig. 24 is an observation image of the section on the plated surface side of the member when the light radiation is performed for 9 minutes. Fig. 25 is an observation image of the section on the plated surface side of the member when the light radiation is performed for 12 minutes. In each case, a light-color portion in the section is the deposit resulting from the electroless plating treatment (plating deposit), and results of measurement of the thickness of the electroless plating layer formed of the deposit in each observation image are presented in the image. A layer further to the surface side relative to the electroless plating layer is a carbon layer formed of the carbon accumulated for performing the FIB method.

As illustrated in Fig. 21, when the light radiation is not performed, the surface of the elastic section 10E is not entirely coated with the plating deposit in the section on the plated surface side of the member. As illustrated in Fig. 22, when the light radiation was is performed for 3 minutes, the surface of the elastic section 10E is substantially entirely coated with the plating deposit. As illustrated in Fig. 23, when the light radiation is performed for 6 minutes, the entirety of the surface of the elastic section 10E is coated with the plating deposit. As illustrated in Figs. 24 and 25, when the light radiation is performed for 9 minutes and 12 minutes, the entirety of the surface of the elastic section 10E is coated with the plating deposit similarly to the case where the light radiation is performed for 6 minutes.

Although the present invention has been described using the embodiment, the technical scope of the present invention is not limited to the scope described in the embodiment having been described. It is clear for one skilled in the art that a variety of changes or modifications can be added to the above-described embodiment. From the description of the claims, embodiments to which such changes or modifications are added can also be included in the technical scope of the present invention.

### Examples

Although the present invention will be more specifically described by examples, the present invention is not limited to these.

### (First Example) Measurement of Variations in the Thickness and Rubber Elastic Hardness

Ten test pieces (5 mm square, 3 mm thick) formed of silicone-based rubber (having 70 degrees of rubber hardness measured with a rubber hardness scale to be described later; hereinafter the same) were prepared as base materials formed of elastic sections. Precleaning was performed for removal of contamination from the surfaces of the test pieces with "Ace Clean 820, Ace Clean 810" made by Okuno Chemical Industries Co., Ltd. The oxidizing treatment was performed on one surface of each of the cleaned test pieces by the UV light radiation in which the light was radiated for 1 minute using the excimer UV lamp ("H0522" made by USIO INC., central wave length: 172 nm, irradiance: 6 mW/cm²). Results of measurement of the thickness of the test pieces before and after the UV light radiation are illustrated in Table 3.

**[Table 3]**

| Test piece No. | Thickness (mm) | |
|---|---|---|
| | Before radiation | After radiation |
| 1 | 2.902 | 2.918 |
| 2 | 2.906 | 2.913 |
| 3 | 2.905 | 2.905 |
| 4 | 2.914 | 2.898 |
| 5 | 2.909 | 2.898 |
| 6 | 2.91 | 2.906 |
| 7 | 2.918 | 2.916 |
| 8 | 2.924 | 2.913 |
| 9 | 2.921 | 2.91 |
| 10 | 2.925 | 2.901 |
| Average | 2.913 | 2.908 |
| Maximum | 2.925 | 2.918 |
| Minimum | 2.902 | 2.898 |

As illustrated in Table 3, variation of the test pieces in thickness due to the oxidizing treatment is 0.2% or smaller by a calculation based on averages. Such a degree of variation is negligible.

The same treatment as the precleaning was performed as the degreasing treatment on the test pieces having undergone the oxidizing treatment. The test pieces having undergone the degreasing treatment were dipped into a 2% hydrochloric acid aqueous solution for neutralization. The electroless plating treatment (for build-up, THRU-CUP series by C. Uyemura & Co., Ltd.) was performed on the neutralized test pieces.

The plating treatment time was varied from 20, 30, to 40 minutes so as to obtain members having the electroless plating layers of different thicknesses.

The rubber hardness (unit: degree) of surfaces of the base materials (neutralized test pieces) and the members each including the electroless plating layer on the electroless plating layer side (in the case of the base material, the one surface) was measured by using a rubber hardness scale ("WR-104A" made by Nishitokyo Seimitsu, in compliant with JIS K 6253, ISO 7619, and ASTM D 2240). Measurement results are illustrated in Table 4. The rate of change of the rubber hardness based on averages of the results of ten test pieces is written in the last line in Table 4.

**[Table 4]**

| Test piece No. | Rubber hardness (degrees) | | | |
|---|---|---|---|---|
| | Base material | Plating time (minutes) | | |
| | | 20 | 30 | 40 |
| 1 | 72 | 73.5 | 74.5 | 73.5 |
| 2 | 73 | 75 | 75 | 75 |
| 3 | 72 | 75 | 75.5 | 75.5 |
| 4 | 73 | 75 | 75 | 74.5 |
| 5 | 73 | 75 | 75.3 | 75.5 |
| 6 | 73.5 | 74.5 | 74.8 | 75 |
| 7 | 73 | 75 | 75 | 75.8 |
| 8 | 73 | 74.5 | 75.5 | 75 |
| 9 | 74 | 74.5 | 75 | 75.5 |
| 10 | 74 | 74 | 75 | 75.3 |
| Average | 73.1 | 74.6 | 75.1 | 75.1 |
| Maximum | 74 | 75 | 75.5 | 75.8 |
| Minimum | 72 | 73.5 | 74.5 | 73.5 |
| Rubber hardness change rate based on average | | 2.1% | 2.8% | 2.8% |

As illustrated in Table 4, it has been verified that the rubber hardness of the plated surfaces of the members including the electroless plating layers increases as the plating time increases. However, the degree of the increase is several %.

### (Second Example) Measurement of a Repulsive Force When the Compression Operation is Performed

A test piece (5 mm diameter, 3 mm thick) formed of silicone-based rubber (having 70 degrees of rubber hardness) was prepared as the base material formed of the elastic section. The main surface of the test piece was pressed with a compression rate of 30% (pressing depth of 0.9 mm) by using a repulsive force gage (digital force gage ZP-500N made by IMADA CO., LTD.) so as to measure the repulsive force (unit: N). This measurement was repeated four times, and the measurement was performed five times in total.

A member that includes an electroless copper plating layer having a thickness of 1.2 µm (average of measurement results at five positions) was obtained by performing on the test piece a manufacturing method similar to the member-manufacturing method according to the first example. The above-described measurement of the repulsive force at a compression rate of 30% was repeatedly performed on the obtained member (pressing the surface on the electroless plating layer side). The measurement was performed five times in total.

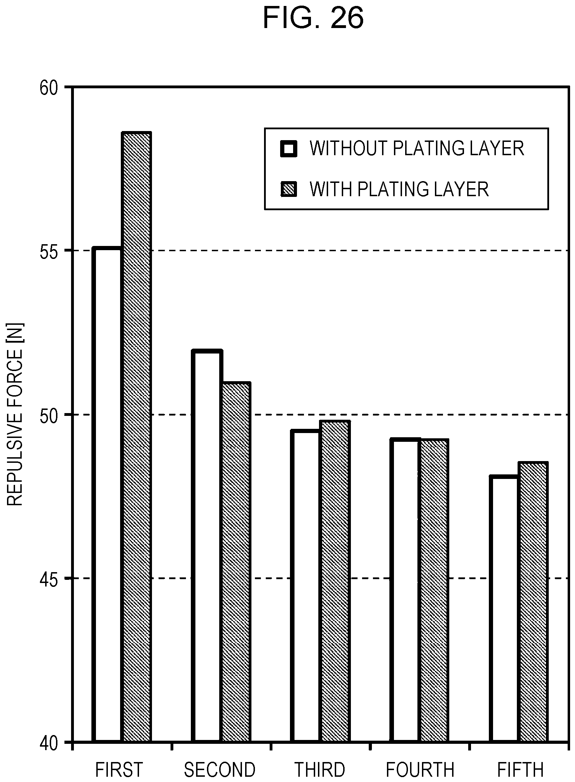

The above-described measurement was performed on three of the test pieces. Averages of the results with the test pieces are obtained. The repulsive force having been obtained as described above and repulsive stress (unit: N/mm²) calculated based on the repulsive force are illustrated in Table 5 and Fig. 26.

**[Table 5]**

| | No. of times | Repulsive force (N) | Repulsive stress (N/mm²) |
|---|---|---|---|
| Without plating layer (base material) | 1 | 55.1 | 3.42 |
| | 2 | 51.9 | 3.23 |
| | 3 | 49.5 | 3.07 |
| | 4 | 49.2 | 3.06 |
| | 5 | 48.1 | 2.99 |
| With plating layer (member) | 1 | 58.6 | 3.64 |
| | 2 | 51.0 | 3.17 |
| | 3 | 49.8 | 3.09 |
| | 4 | 49.2 | 3.06 |
| | 5 | 48.5 | 3.01 |

As illustrated in Table 5 and Fig. 26, in the first measurement of the repulsive force, the repulsive force of the member with the electroless plating layer is higher than the repulsive force of the base material without the electroless plating layer. However, as the number of times of the repetitive test increases, the difference in repulsive force between the member and the base material reduces and variation in repulsive stress due to the increase in the number of times of the repetition reduces. In the third test and after, the repulsive stress of the base material without the electroless plating layer and the repulsive stress of the member with the electroless plating layer are about 3 N/mm². Thus, it has been verified that the effect on the repulsive force, the effect being caused by the difference in repulsive force between a structure with the electroless plating layer and a structure without the electroless plating layer, is substantially negligible.

### (Third Example) Measurement of Resistance When the Compression Operation is Performed

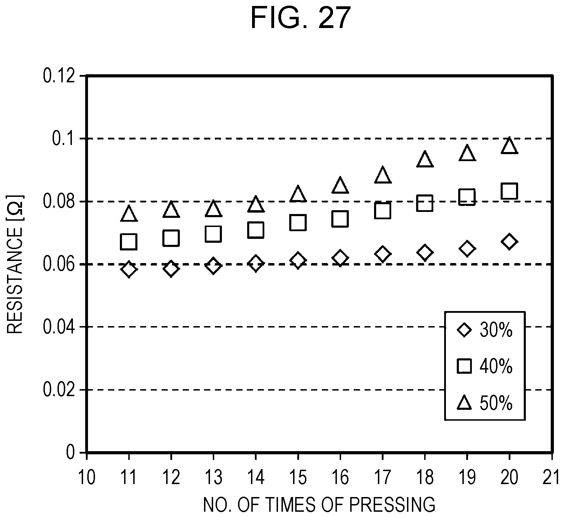

Three test pieces (5 mm diameter, 3 mm thick) were prepared. Each of the test pieces was formed of silicone-based rubber (having 70 degrees of rubber hardness) as the base material formed of the elastic section. Members that include the respective electroless copper plating layers having thicknesses of 0.34 µm, 0.68 µm, and 0.97 µm (each of the thicknesses is an average of measurement results at five positions) were obtained by performing on the test pieces a manufacturing method similar to the member-manufacturing method according to the first example. The plated surfaces of the obtained members were respectively pressed at a compression rate of 30% (pressing depth of about 0.9 mm), a compression rate of 40% (pressing depth of about 1.2 mm), and a compression rate of 50% (pressing depth of about 1.5 mm), and the resistance of each of the electroless copper plating layers was measured under a maximum compressed state. The measurement was performed by using a Milliohm Meter ("4338B" made by Agilent Technologies). This measurement of the resistance during compression was repeated 19 times, and the measurement was performed 20 times in total. Measurement results from 11th pressing to 20th pressing when the plating thickness (Cu thickness) is 0.34 µm are illustrated in Table 6 and Fig. 27. Table 6 also includes the increase rate (unit: %) of resistance at the 20th maximum compressed state with reference to the resistance at the 11th maximum compressed state.

**[Table 6]**

| No. of times of pressing | Cu thickness: 0.34 µm | | |
|---|---|---|---|
| | 30% | 40% | 50% |
| 11 | 0.0584 | 0.0669 | 0.0762 |
| 12 | 0.0586 | 0.0681 | 0.0775 |
| 13 | 0.0595 | 0.0695 | 0.0778 |
| 14 | 0.0603 | 0.0707 | 0.0792 |
| 15 | 0.0612 | 0.0731 | 0.0825 |
| 16 | 0.0619 | 0.0743 | 0.0853 |
| 17 | 0.0631 | 0.0769 | 0.0885 |
| 18 | 0.0636 | 0.0793 | 0.0935 |
| 19 | 0.0648 | 0.0813 | 0.0955 |
| 20 | 0.0671 | 0.0832 | 0.0979 |
| Increase rate | 14.9% | 24.4% | 28.5% |

As illustrated in Table 6 and Fig. 27, it is observed that the resistance of the electroless copper plating layer tends to slightly increase when the compression operation is repeatedly performed. This tendency is significant when the compression rate is high and the thickness is small.

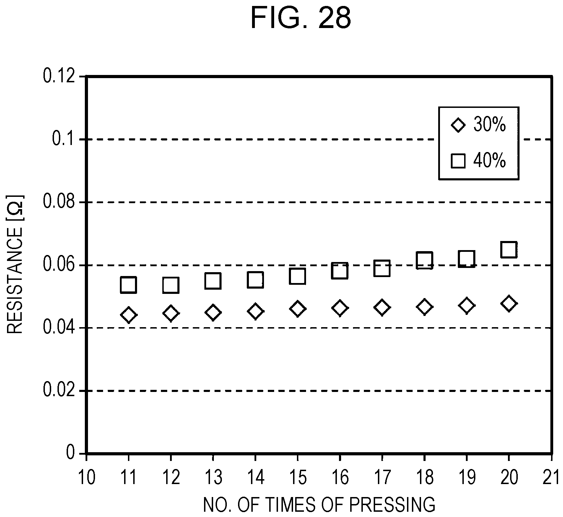

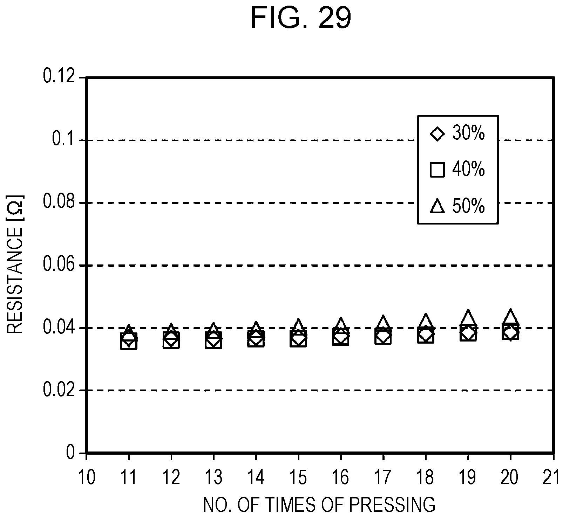

The above-described test was also measured with the electroless copper plating layer having the thickness (Cu thickness) of 0.68 µm and 0.97 µm. Results are illustrated in Table 7 and Fig. 28 (Cu thickness: 0.68 µm) and in Table 8 and Fig. 29 (Cu thickness: 0.97 µm). Measurement was not performed at the compression rate of 50% with the electroless copper plating layer having the thickness (Cu thickness) of 0.68 µm. As clearly understood from the results illustrated in Tables 6 to 8, as the thickness of the electroless copper plating layer increases, variation in resistance due to the increase in the number of times of pressing or variation in resistance based on variation in the compression rate is unlikely to occur.

**[Table 7]**

| No. of times of pressing | Cu thickness: 0.68 µm | |
|---|---|---|
| | 30% | 40% |
| 11 | 0.0441 | 0.0537 |
| 12 | 0.0446 | 0.0536 |
| 13 | 0.0449 | 0.0549 |
| 14 | 0.0453 | 0.0553 |
| 15 | 0.0461 | 0.0564 |
| 16 | 0.0463 | 0.0581 |
| 17 | 0.0465 | 0.0589 |
| 18 | 0.0467 | 0.0614 |
| 19 | 0.0471 | 0.0619 |
| 20 | 0.0478 | 0.0647 |
| Increase rate | 8.4% | 20.5% |

**[Table 8]**

| No. of times of pressing | Cu thickness: 0.97 µm | | |
|---|---|---|---|
| | 30% | 40% | 50% |
| 11 | 0.0368 | 0.0358 | 0.0385 |
| 12 | 0.0366 | 0.0361 | 0.0388 |
| 13 | 0.0365 | 0.0361 | 0.0392 |
| 14 | 0.0369 | 0.0365 | 0.0395 |
| 15 | 0.0369 | 0.0366 | 0.0403 |
| 16 | 0.0374 | 0.0371 | 0.0408 |
| 17 | 0.0377 | 0.0373 | 0.0415 |
| 18 | 0.0381 | 0.0377 | 0.0421 |
| 19 | 0.0385 | 0.0384 | 0.0433 |
| 20 | 0.0386 | 0.0388 | 0.0436 |
| Increase rate | 4.9% | 8.4% | 13.2% |

Linear approximation of resistance R and a number of times of pressing N at each of the compression rates is made based on the results of the resistance increase rate illustrated in Table 6 and Fig. 27. As a result, variation RR (unit: Ω/time) in resistance rate per pressing is as follows:
at the compression rate of 30%: 0.0026 Q/time;
at the compression rate of 40%: 0.0019 Q/time; and
at the compression rate of 50%: 0.0009 Ω/time.

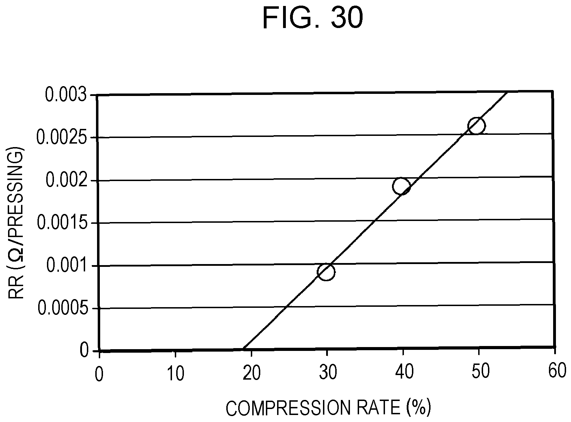

From these results, the relationship between the variation RR and the compression rate is plotted in graph illustrated in Fig. 30. As illustrated in Fig. 30, the X-intercept of an approximate line obtained by linear approximation of three points in the graph is about 20%. Accordingly, it is indicated that, when the thickness of the electroless copper plating layer is about 0.34 µm, practically, the resistance increase rate can be considered not to occur in the case where the compression rate is 20% or smaller. Likewise, when the thickness of the electroless copper plating layer is about 0.97 µm, practically, the resistance increase rate can be considered not to occur in the case where the compression rate is 20% or smaller.

### Reference Signs List

- 1, 1A, 1B: member
- 10: base material
- 10E: elastic section
- 20: electroless plating layer
- 10EA: one surface of the elastic section 10E
- 100: contact switch
- 110: substrate
- 10D: deformable portion
- 1AR: recessed portion
- 120: electrode
- F: force
- 200: connector
- 10H: hollow
- 10S: inner side surface
- 10A: one opening
- D1: arrow
- 210: pin

## Claims

1. A member comprising:
a base material that includes an elastic section that includes a sulfur-containing elastic body; and
an electroless plating layer provided on the elastic section of the base material,
wherein the elastic section has a portion that is elastically deformable together with the electroless plating layer.

2. The member according to Claim 1,
wherein the sulfur-containing elastic body includes vulcanized rubber.

3. The member according to Claim 1 or 2,
wherein the electroless plating layer includes one or two or more elements selected from the group consisting of Au, Ag and Cu.

4. An electric/electronic component comprising:
the member according to any one of Claims 1 to 3.

5. The electric/electronic component according to Claim 4, further comprising:
an electric contact,
wherein at least part of the electric contact includes the electroless plating layer included in the member.

6. The electric/electronic component according to Claim 4 or 5, further comprising:
at least one of a deformable portion and a slidable portion,
wherein the elastic section included in the member is deformed during use.

7. An electric/electronic device comprising:
the electric/electronic component according to any one of Claims 4 to 6.

8. A member-manufacturing method for manufacturing the member according to any one of Claims 1 to 3, the method comprising the steps of:
oxidizing in which oxidizing treatment which increases oxygen concentration near a surface of the elastic section of the base material is performed; and
plating in which electroless plating treatment is performed on the surface of the elastic section on which the oxidizing treatment has been performed in the step of oxidizing.

9. The method according to Claim 8,
wherein the oxidizing treatment includes ultraviolet radiation treatment in which ionizing radiation including an ultraviolet ray is radiated to the surface of the elastic section.

10. The method according to Claim 9,
wherein the ultraviolet radiation treatment is performed by using an excimer light source.

11. The method according to any one of Claims 8 to 10,
wherein sulfur in the sulfur-containing elastic body included in the elastic section is oxidized in the oxidizing treatment.

12. The method according to Claim 11,
wherein a spectrum obtained by measuring by using an X-ray photoelectron spectroscopy the surface of the elastic section of the base material having undergone the step of oxidizing has a plurality of peaks based on S2p, and
wherein a proportion of one peak of the plurality of peaks attributed to SO₂ in a sum of another peak of the plurality of peaks attributed to S and the one peak attributed to SO₂ is 0.45 or larger in area.

13. The method according to Claim 12,
wherein the proportion is 1 or larger.

14. The method according to any one of Claims 11 to 13,
wherein, when the surface of the elastic section of the base material having undergone the step of oxidizing is etched by argon sputtering by 5 nm calculated based on an SiO₂ sputter time and a composition analysis is performed on the obtained surface by an X-ray photoelectron spectroscopy, O content is 20 atomic % or larger.

15. The method according to any one of Claims 11 to 14,
wherein, when the surface of the elastic section of the base material having undergone the step of oxidizing is etched by argon sputtering by 25 nm calculated based on SiO₂ sputter time and a composition analysis is performed on the obtained surface by an X-ray photoelectron spectroscopy, O content is 20 atomic % or larger.
